# NEW EUROPEAN PATENT SPECIFICATION

(11) **EP 0 582 350 B2**
(45) Date of publication and mention of the opposition decision: **25.07.2007**
(45) Mention of the grant of the patent: 24.06.1998
(21) Application number: 93202279.1
(22) Date of filing: 02.08.1993
(51) Int. Cl.: A01K 1/12

(54) **A construction for milking animals**
Konstruktion zum Melken von Tieren
Construction pour la traite d'animaux

(30) Priority: 05.08.1992 NL 9201413
(43) Date of publication of application: 09.02.1994
(60) Divisional application: 97203841.8
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 091 892
- EP-A- 0 270 165
- EP-A- 0 389 013
- EP-A- 0 566 201
- DD-A- 118 504
- DE-A- 3 702 465
- FR-A- 2 330 314
- GB-A- 227 591
- GB-A- 1 468 676
- SU-A- 904 608
- SU-A- 1 042 704
- US-A- 3 246 631
- US-A- 4 889 074
- System solutions for dairy cows, ALFA LAVAL AB, Farm Equipment Division, sep. 76
- one step closer to auto milking, dairy farmer, sep. 1981

## Description

The present invention relates to a construction for milking cows characterized by the features of the preamble of claim 1. Such a construction is known from EP-A-0 389 013. This document describes a loose house with partitioning means to divide the cow shed area into two sub-areas. Via the partitioning means the animals can freely move from one to the other sub-area. The sub-areas are further separated from each other by a closet type of device which may include a feeding system, a washing station and a milking apparatus. In this construction a division of animals into groups cannot be maintained.

These constructions have the disadvantage that they are not always sufficiently suitable for automatically milking a plurality of animals in an efficient manner. Therefore, according to the invention, the construction as described above is characterized by the features of claim 1. Setting up a milk box including a milking robot in a loose house renders it possible for the cows to reach the milking robot via the loose house during the summer months, when they graze in a pasture, whilst during the winter months, when they reside in the cow shed, they can go directly to the milking robot In the Art. 54(3) EPC document EP-A-0 566 201 a construction as described in the preamble is known, wherein the cow shed area is divided into at least three sub-areas. In this construction the consecutive groups of animals have to pass a number of sub-areas before arriving to the milk box or after being milked. There are no connection means to connect directly each of the sub-areas with the milk box in such a way that each of these sub-areas can be connected with one other sub-area via the milk box, so that animals which belong to one group and are still to be milked can consecutively enter the milk box from any of the sub-areas and can leave the milking box after having been milked and be guided to a different sub-area.

Besides the cow shed also the pasture can be provided with partitioning means, such as, for example, fences or electric fence wire, which divide the pasture into a plurality of pasture sections, in such a manner that each pasture section is in connection with only one sub-area and each pasture section can give access via a relevant sub-area to the milk box. This renders it possible to divide the cows to be milked into groups and to have each of these groups graze in a separate pasture section, the cows then having the opportunity to move freely to a relevant sub-area in the cow shed. Wherever they may be, they can at all times reach the milk box both from a pasture section via the relevant sub-area in the loose house or directly from a sub-area. Because of the division into groups, it is possible to plan the time in such a manner that a predetermined time interval is available to each group of cows, within which they can reach the milk box from a relevant pasture section or from a relevant sub-area. More in particular in the winter months, it is important that the connection between a pasture section and a relevant sub-area can be closed.

Further, according to the invention, the milk box can in addition be provided with a changing entrance and exit, or with an entrance and exit which have a changing location. The entrance and the exit of the milk box are preferably arranged such that the cows can pass through the milk box in one manner only.

In a first preferred embodiment, the milk box is pivotal about an upwardly directed shaft. A practical implementation is then obtained when the milk box is disposed on a platform which is pivotal about an upwardly directed shaft. An automatically controllable control member can then be present, with the aid of which the milk box is pivotal through an adjustable angle about the upwardly directed shaft. This construction renders it possible for the milk box to be pivoted each time to such a position that always one sub-area of the cow shed is in connection with the entrance of the milk box, and an other sub-area of the cow shed is in connection with the exit of the milk box, so that, irrespective of the fact in which sub-area they are located, the animals can always pass to a different sub-area via the milk box. Although the entrance and the exit of the milk box can be constituted by only one single opening, provided in, for example, the longitudinal side wall of the milk box, it is advantageous when the entrance and the exit of the milk box are formed by two openings made in a side-by-side relationship in a longitudinal side wall of the milk box. It is of course alternatively possible to provide the entrance and the exit at the two short sides of the milk box or in different longitudinal sides thereof. In the latter case, the entrance is in the rearmost portion of one longitudinal side wall and the exit in the leading portion of the other longitudinal side wall. The entrance and the exit of the milk box can be closed by automatically controllable doors.

So as to prevent the animals from getting caught between the moving doors, the milk box may be provided, in accordance with the invention, with an arc-shaped construction which pivots together with the milk box. Furthermore it is particularly advantageous for the milk box to be surrounded by a circular screen, which of course leaves the openings for the entrance and the exit clear, as otherwise the animals could pass quite near along the milk box from one sub-area into an other. An advantageous construction of the screen is furthermore obtained when the entrance and the exit of the milk box are closable by outwardly pivoting doors provided with an arc-shaped screening element which, when the entrance and/or exit are closed by the doors, is contiguous in the shape of a circle to at least a portion of the arc-shaped screen and which, when the entrance and/or exit are released, moves approximately along the lower or upper side of a portion of the arc-shaped screen.

In accordance with a further preferred feature of the invention, the cow shed has doors, through which the cows at a given position of one or a plurality of doors can pass via the milk box to a different cow shed section, from where the cows can proceed after, for example, eight hours through the milk box again to yet a further cow shed section. In a preferred construction the cow shed is provided with a system of corridors with passageways arranged near the milk box, in which computer-controlled doors are accommodated which can be controlled in such a manner that a cow can pass from a given sub-area to an other sub-area via the milk box. Consequently, instead of a pivotal milk box, use can alternatively be made of a specific system of corridors with passageways and computer-controlled doors, so that, when one or a plurality of these doors is/are in a given position, the cows can pass through the milk box from a given sub-area to an other given sub-area of the cow shed, from where the cows can again proceed after, for example, eight hours to an other sub-area of the cow shed via the milk box.

For a better understanding of the invention and to show how the same may be carried into effect, reference will now be made, by way of example, to the embodiment shown in the accompanying drawings, in which the cows are referred to simply as animals and in which:
Figures 1 and 2 each show a pasture area, divided into four pasture sections, in the centre of which there is a loose house:
Figure 3 shows a loose house containing a pivotal milk box, which is positioned in the pasture area which is divided into four pasture sections

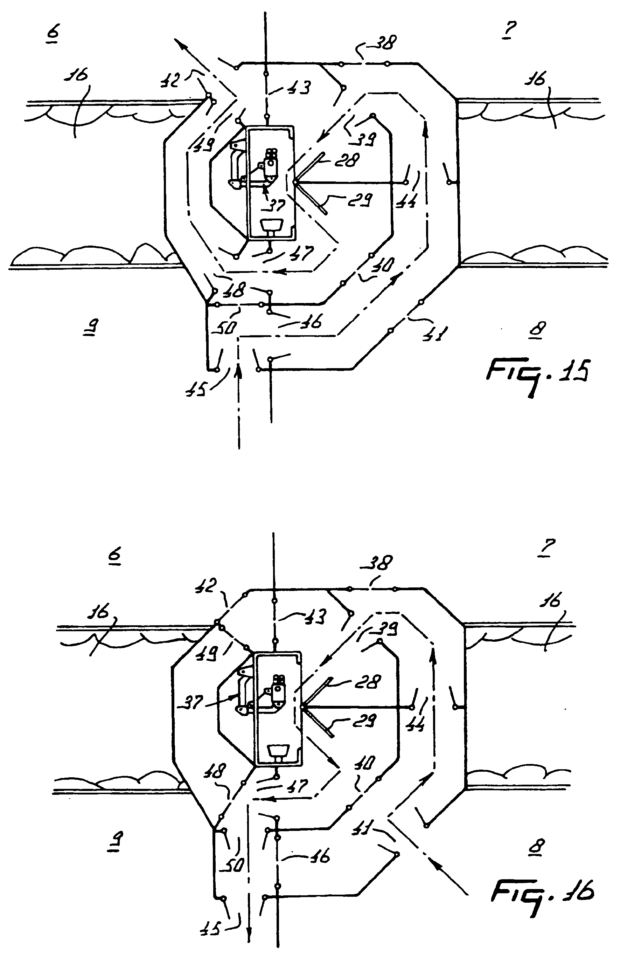

Figures 4 to 9 show the loose house illustrated in Figure 3, in which the milk box is each time pivoted to a different position;
Figure 10 is a plan view of a pivotal milk box;
Figure 11 is a side view of the milk box shown in Figure 10;
the diagrams A to I of Figure 12 show the mode of pivoting of the milk box, and
Figures 13 to 16 show a milk box in a loose house having a corridor system with computer-controlled doors, in which the position of the doors is each time shown in such a position that the animals can proceed from a given sub-area to an other sub-area.

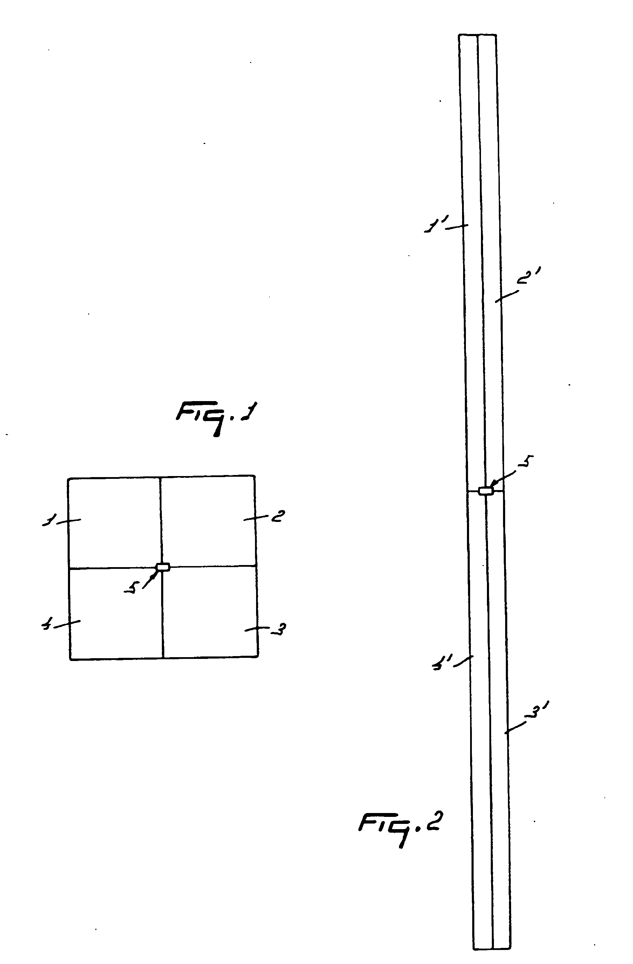

Figure 1 shows a pasture area measuring, for example, 500 x 500 meters, which is divided into four pasture sections 1, 2, 3 and 4, in the centre of which there is arranged a loose house 5. By placing the loose house in the centre of the pasture area, it is achieved that the animals present in the pasture sections can always reach the loose house with milk box within the shortest possible period of time.

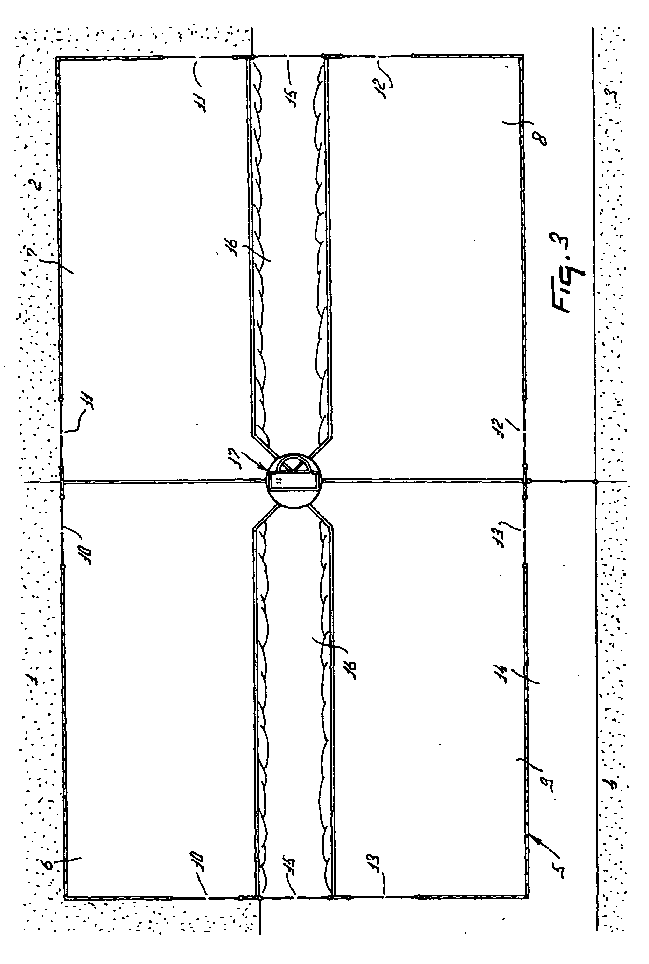

Figure 2 shows a more extensive pasture area, also divided into four pasture sections 1', 2', 3' and 4', there also being present again a loose house 5 with a milk box in the centre of the area. Even if this pasture area would have a length of 2500 meters, then the animal most remote from the loose house can still reach the loose house in a limited number of minutes, e.g. 15 minutes. In the summer months in particular, it will be advantageous when the animals in the separate pasture sections can reach the loose house from a relevant pasture section, whereas in the winter months, when the cows are in the cow shed, the connection between the pasture sections and the loose house can be closed. As is shown in Figure 3, the loose house 5 is in this embodiment also divided into four sub-areas 6, 7, 8 and 9. Each of these sub-areas is in connection via doors with a relevant pasture section. The sub-area 6 is in connection with the pasture section 1 via the doors 10. the sub-area 7 with the pasture section 2 via the doors 11, the sub-area 8 with the pasture section 3 via the doors 12 and the sub-area 9 with the pasture section 4 via the doors 13. During the summer months, the doors 10 to 13 will be open, whereas during the winter months, when the animals are in the sub-areas 6.7.8 or 9, the doors 10 to 13 will be closed. Furthermore. Figure 8 shows that a portion of the loose house 5 is enclosed by a path 14. Over this path 14 and via doors 15 access can be obtained, possibly by a tractor or silage wagon, to two feeding passages 16 in the loose house 5, which feeding passages run transversely through the loose house to as far as a milk box positioned in the midway point of the loose house. At both sides, the feeding passages 16 are provided with feeding troughs or feed channels, in which roughage can be deposited for the animals present in the loose house.

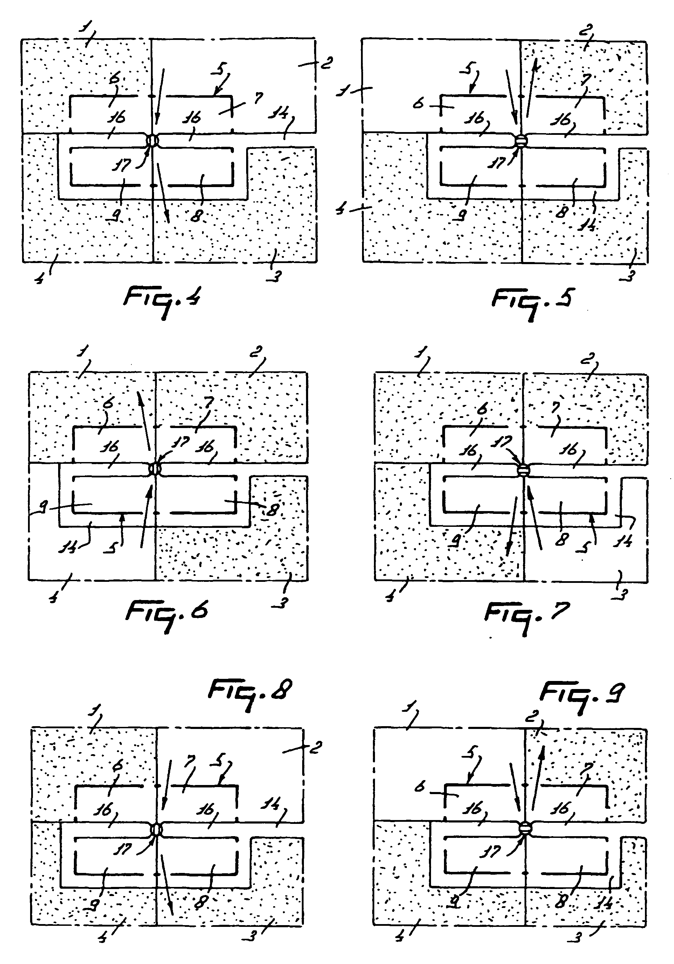

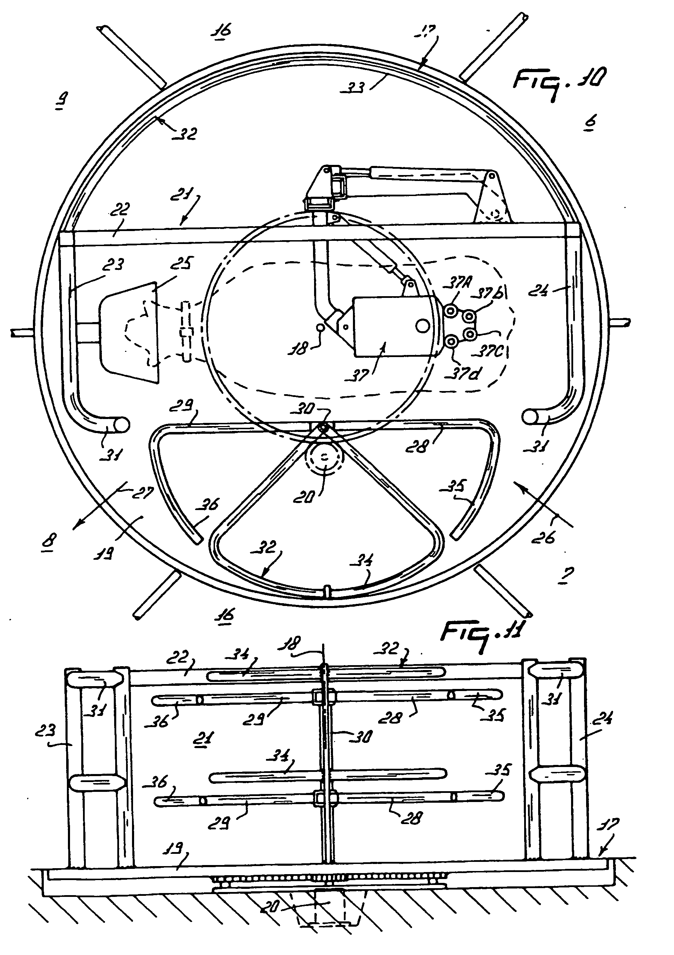

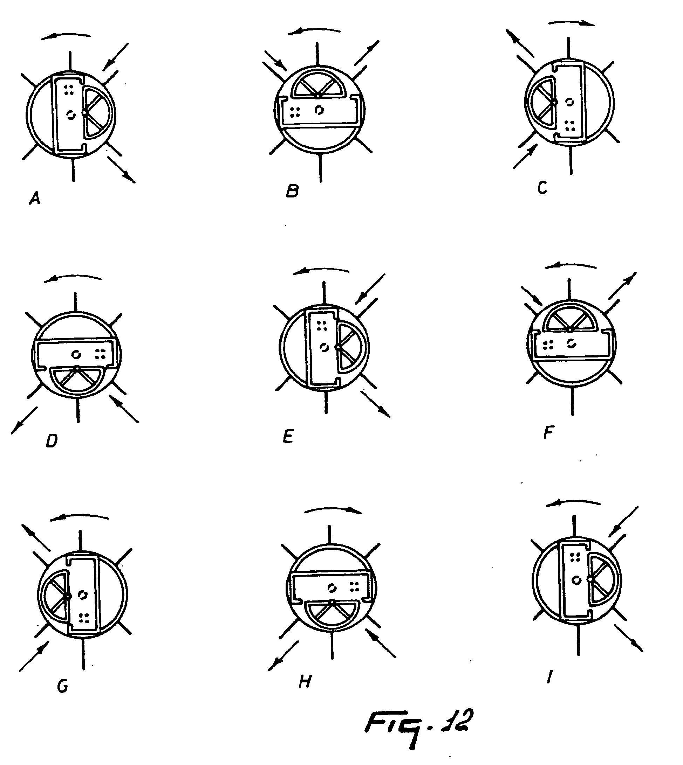

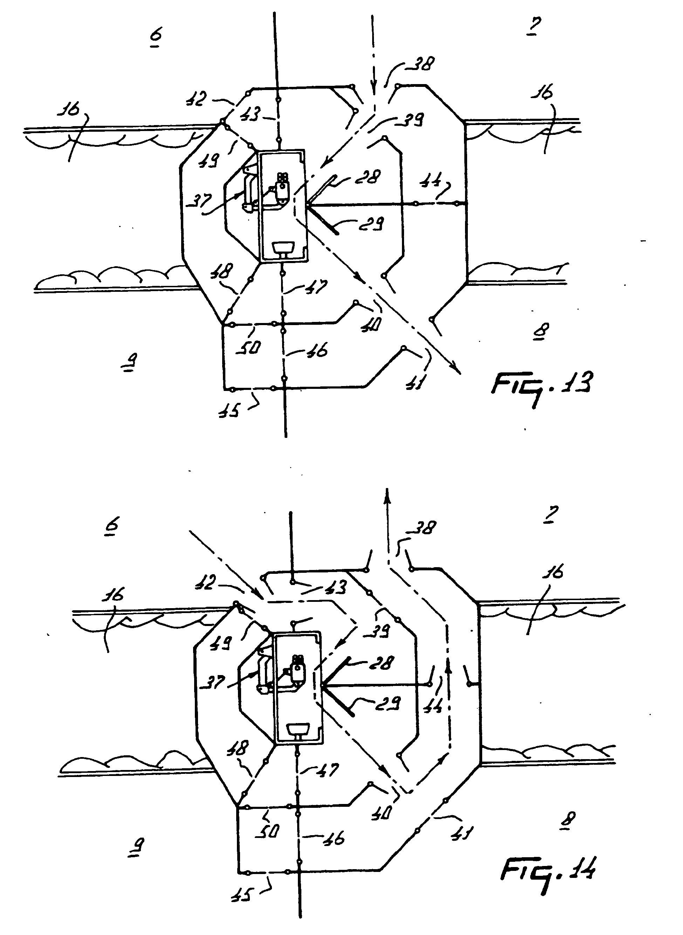

When, as in the present embodiment, the pasture area and the loose house are divided into four pasture sections or four sub-areas, respectively, then the animals are divided into three groups. If the capacity of the milk box is adjusted to e.g. fifty animals, each group will include approximately seventeen animals. Each group of animals can be guided from the pasture section or from the sub-area of the loose house in which they are present, via the milk box 17 to an other loose house sub-area and from there to a different pasture section. In Figure 4, a first group of animals is located in the pasture section 2 or in the sub-area 7, a second group of animals in the pasture section 1 or in the sub-area 6. and a third group of animals in the pasture section 4 or in the sub-area 9. No animals are then present in the pasture section 3 and in the sub-area 8. The milk box 17, which is set-up such that it is pivotal, connects the sub-areas 7 and 8 in Figure 4. In this embodiment, if milking of the animals starts at 04.00 a.m., the animals can have been milked automatically in a milking period from 04.00 to 06.15 a.m. and they are present in the pasture section 2 or in the sub-area 7. In this milking period, a group of e.g. seventeen animals can enter consecutively from the sub-area 7 the milk box 17 where they are milked automatically, whereafter they can proceed from the milk box 17 to the sub-area 8 and possibly to the pasture section 3. In this milking period, lasting from 04.00 to 06.15 a.m., the animals in the pasture section 1 and in the sub-area 6. as do also the animals in the pasture section 4 and in the sub-area 9. remain quietly in the area then available to them. At 06.15 a.m. the animals present in the pasture section 2 or in the sub-area 7 can have been milked and have gone via the milk box to the sub-area 8 or possibly to the pasture section 3. The milk box 17 is then pivoted in such a manner that it now forms a connection between the sub-areas 6 and 7. In the milking period from 06.15 to 08.30 a.m., the animals in the pasture section 1 or in the sub-area 6 are milked. These animals can proceed via the milk box 17 to the sub-area 7 and optionally to the pasture section 2. The groups of animals present in the pasture section 3 or in the sub-area 8, or in the pasture section 4 and in the sub-area 9, remain quietly in the area available to them. At 08.30 a.m. the animals have proceeded from the pasture section 1 and the sub-area 6 via the milk box 17 to the sub-area 7 and optionally to the pasture section 2, and the milk box 17 can be pivoted to the position shown in Figure 6, in which position it forms a connection between the sub-areas 9 and 6. In the milking period from 08.30 to 10.45 a.m., the animals in the pasture section 4 or in the sub-area 9 are milked and go via the milk box to the sub-area 6 or the pasture section 1. In the manner described above, all three groups of cows will have been milked for the first time in the milking period from 04.00 to 10.45 a.m., After, for example, a rest interval of 35 minutes, the second milking cyde can start. The milk box 17 is pivoted to such a position that it forms a connection between the sub-areas 8 and 9. In the milking period from 11.20 a.m. to 01.35 p.m., the animals also milked first in the first milking cyde can again enter the milk box 17 consecutively in order to be milked there, and they can proceed from there to the sub-area 9 and optionally to the pasture section 4. At 01.35 p.m. the milk box is then pivoted to a position in which it again forms a connection between the sub-areas 7 and 8, so that the animals in the pasture section 2 or in the sub-area 7 can be milked and can go to the sub-area 8 and optionally to the pasture section 3. At 03.50 p.m. the milk box 17 is pivoted to such a position that it forms a connection between the sub-areas 6 and 7, so that the animals in the pasture section 1 or in the sub-area 6 can be milked and can walk to the sub-area 7 and optionally to the pasture section 2. After this second milking cyde from 11.20 a.m. to 06.05 p.m., a third milking cyde can start for all three groups of animals, after a rest interval of e.g. 35 minutes. After this third milking cyde has ended, a rest interval is taken from 01.25 to 04.00 a.m., whereafter the above-described cyde can start again. By dividing the group of approximately fifty animals into three groups of approximately seventeen animals, regular milking periods are obtained. It is advantageous for the animals' health and comfort when always at least two groups of animals can graze, rest or ruminate during the period of time in which another group of animals is milked. In this connection, also the rest intervals between the milking cycles are advantageous. It will. -however, be obvious that the invention is not limited to the number of animals, the number of groups and the number of animals per group, chosen here by way of example, which also applies to the schedule of the milking periods and the rest intervals as described in the foregoing. All kinds of modifications thereof are of course possible.

The milk box 17 is shown in greater detail in Figures 10 and 11. The milk box is pivotal about an upwardly directed shaft 18 and is mounted on a platform 19 which is pivotal about said shaft. The milk box is shown in Figure 10 in such a manner so as to form a connection between the sub-areas 7 and 8.

The milk box can be pivoted with the aid of a control member 20, for example a stepping motor, through an adjustable angle about the upwardly directed shaft 18. By means of a computer, preferably the one which is used for the automatic milking of the animals, or with the aid of an electro-mechanical circuit, a control signal can be applied at predetermined instants to the control member 20, which in response thereto pivots the milk box 17, more specifically through an angle which is preset either in the computer or preset in the electro-mechanical circuit A frame 21 is disposed on the platform 19. This frame is a dividing wall of the milk box, in which the animal takes place during milking. The frame 21 includes a frame portion 22 which constitutes a longitudinal side of the milk box and two frame portions 23 and 24 which form the short sides thereof. A feed trough 25 is attached to the frame portion 23, which feed trough is in connection with an automatic feeding system. The milk box 17 has an entrance 26 and an exit 27, which entrance and exit can be closed by respective doors 28 and 29. The doors 28 and 29 are pivotal about an upwardly directed shaft 30 and can be pivoted about the shaft 30 with the aid of a computer-controlled motor in order to open or dose the entrance and/or the exit 26, and 27, respectively. When the doors 28 and 29 dose the entrance 26 and the exit 27, respectively, then the doors 28 and 29 form a closed longitudinal side of the milking parlour and are then contiguous to the curved portion 31 of the short sides of the frame portion 23 and 24 which form the milking parlour.

To prevent the possibility of the animals getting caught between the doors 28 and 29 or from possibly proceeding from the sub-area 6 into the sub-area 9 by passing along the milk box, or, for example, from the sub-area 7 to the sub-area 8 along the other side of the milk box, the latter is provided with an arc-shaped screen 32 which pivots together with the milk box 17 and only releases the entrance and exit 26, 27. The arc-shaped screen 32 has a first portion 33, provided at and behind that frame portion 22 that constitutes a longitudinal side of the milking parlour, and a portion 34 which constitutes a partial screen for the other longitudinal side of the milking parlour. The outwardly pivotal doors 28 and 29 are each provided with an arc-shaped screening element 35 and 36, respectively, which arc-shaped screening elements are contiguous in the form of a circle to the portion 34 of the arc-shaped screen 32 and which, when the entrance and/or exit of the milking parlour is released, moves approximately along the bottom side or along the upper side of the portion 34 of the arc-shaped screen 32.

The milking parlour is furthermore provided with a milking robot 37 with automatically connectable teat cups 37a, 37b. 37c and 37d. This robot 37 is arranged behind the longitudinal side constituted by the frame portion 22. When an animal has arrived in the milk box, the arm of the robot 37 can be swivelled to under the animal, so that the teat cups disposed at the end of the robot arm can be connected to the teats of the animal and the milking operation can start Controlling the milking robot 37 and applying the teat cups to the teats of the animal, as well as the subsequent milking procedure, can be realized fully automatically under control of a computer. The computer used for this purpose can also be used for driving the motor 20 by means of which the entire milk box 17 can be pivoted, as well as for driving the motor with the aid of which the doors 28 and 29 can be operated independently of each other.

The diagrams A to I of Figure 12 indicate, by way of example, how, when the loose house is divided into four sub-areas, the milk box 17 can be pivoted during a 24 hour's cycle. Starting from the milk box position shown in diagram A, the milk box is pivoted twice through 90°, during the first milking run, in the anti-clockwise direction and the position shown in diagram C is reached. From the latter position, at the start of the second milking run, the milk box is pivoted through270° in the clockwise direction and thereafter twice through 90° in the anti-clockwise direction, until the position shown in diagram F is reached, in which position the last group of animals is milked during the second milking run. After the second milking run, the milk box is again pivoted through 90° in the clockwise direction and the position shown in diagram G is reached, in which the first group of animals is milked in the third milking run. Thereafter the milk box is pivoted through 90° anti-clockwise and through 270° in the clockwise direction until the milk box has reached the position shown in diagram I, in which last position the last group of animals is subjected to the third milking run. The milk box then is in a position equal to that shown in diagram A. at which point the subsequent 24 hour's cyde of three milking runs can start. This manner of pivoting the milk box has for its aim to prevent it from making a full rotary motion through 360° or more, which might cause problems as regards the connection of tubes and cables thereto.

Figures 13 to 16 show a fixed arrangement of the milk box 17 in the loose house 5, and in which a corridor system with passageways and automatically controlled doors surrounds the milk box. In an identical manner as is shown in Figure 10, the milk box 17 is assembled from a frame 21 having frame portions 22, 23 and 24, whilst a feed trough 25 is attached to the frame portion 24, whilst also here doors 28 and 29 are provided and the milk box is also provided with a milking robot 37. The corridor system with passageways shown in Figures 13 to 16 is equipped with computer-controlled doors 38 to 50, inclusive Figure 13 shows how the animals can reach the sub-area 8 from the sub-area 7 via the milk box In order to reach the milk box, the doors 38, 39 and 28 are opened, whereas the other doors remain closed. After the animal has been milked, it can proceed from the milk box to the sub-area 8. In this situation the doors 29, 40 and 41 are open, whereas the other doors remain closed. Figure 14 illustrates how the animals can go from the sub-area 6 to the sub-area 7 via the milk box. In that case, so as to give access to the milk box, the doors 42, 43 and 28 are opened, whilst all the other doors remain closed. Thereafter, after the animal has been milked, the doors 29, 40. 44 and 38 are opened, whereas the other doors remain closed. Figure 15 shows how the animals can walk from the sub-area 9 to the sub-area 6 via the milk box From the sub-area 9 the animals arrive in the milk box via the doors 45, 46, 44, 39 and 28, whereas the other doors are kept closed; the animals can arrive from the milk box in the sub-area 6 via the doors 29, 47; 48, 49 and 42, whilst then the other doors are kept closed. Figure 16 shows how the animals can reach the sub-area 9 from the sub-area 8 via the milk box- From the sub-area 8 access to the milk box is obtained via the doors 41, 44. 39 and 28, whereas the other doors remain closed; from the milk box the animals can walk to the sub-area 9 via the doors 29, 47, 50 and 45, whilst the other doors remain closed. This sytem of computer-controlled doors is a variant, which indicates how animals can advantageously be milked automatically from a pasture or from a loose house.

Finally, it should be noted that the invention is not limited to the embodiments shown and described here. Modifications are possible, in sofar they are within the scope of the claims;

## Claims

1. A construction for milking cows, comprising a cow shed designed as a loose house (5), the cow shed being provided with partitioning means dividing the cow shed area into sub-areas (6 to 9), the cow shed further comprising a single milk box (17) having a milking robot (37) for automatically milking cows, which milk box (17) is accommodated in the cow shed and can be reached by the cows in consecutive groups either from the cow shed directly or from a pasture via the cow shed, **characterized in that** the cow shed includes at least three sub-areas (6 to 9), white connection means are provided to connect directly each of the sub-areas (6 to 9) with the milk box (17) in such a way that each of these sub-areas (6, 7, 8, 9) can be connected with one other sub-area (7, 8, 9. 6) via the milk box (17), so that cows which belong to one group and are still to be milked can consecutively enter the milk box (17) from any of the sub-areas and can leave the milking box (17) after having been milked and be guided to a different sub-area.

2. A construction as claimed in claim 1, **characterized in that** the cow shed is arranged in a pasture which is provided with partitioning means, such as, for example, fences or electric fence wire, which divide the pasture into a plurality of pasture sections (1 to 4), wherein each pasture section (1 to 4) is in connection with only one sub-area (6 to 9) and each pasture section (1 to 4) can be put into connection with the milk box (17) via a relevant sub-area (6 to 9).

3. A construction as claimed in claim 2, **characterized in that** the connection between a pasture section (1 to 4) and a relevant sub-area (6 to 9) is closable.

4. A construction as claimed in claim 1, 2 or 3, **characterized in that** the milking box (17) has a changing entrance and exit, or an entrance and exit which have a changing location.

5. A construction as claimed in any one of the preceding claims, **characterized in that** the cows can pass in only one manner through the milk box (17).

6. A construction as claimed in any one of the preceding claims, **characterized in that** the milk box is pivotal about an upwardly directed shaft (18).

7. A construction as claimed in claim 6, **characterized in that** the milk box (17) is disposed on a platform (19) which is pivotal about the upwardly directed shaft (18).

8. A construction as claimed in claim 6 or 7, **characterized in that** an automatically controllable control member (20) is present, with the aid of which the milk box (17) is pivotal through an adjustable angle about the upwardly directed shaft (18).

9. A construction as claimed in claim 8, **characterized in that** the control member (20) includes a stepping motor.

10. A construction as claimed in any one of the preceding claims, **characterized in that** the entrance (26) and the exit (27) of the milk box (17) are formed by two openings which are provided in a side-by-side relationship in a longitudinal side wall of the milk box (17).

11. A construction as claimed in claim 10, **characterized in that** the entrance (26) and the exit (27) of the milk box (17) are closed by automatically controllable doors (28, 29).

12. A construction as claimed in claim 6 or any one of claims 7-11 as dependent on claim 6, **characterized in that** the milk box (17) includes an arc-shaped screen (32) which pivots together with the milk box (17).

13. A construction as claimed in claim 12, **characterized in that** the entrance (26) and exit (27) of the milk box (17) are closable by outwardly pivotal doors (28, 29) which are provided with an arc-shaped screening element (35, 36) which, when the entrance (26) and/or exit (27) are closed by the doors (28, 29), is contiguous in a circular shape to at least a portion of the arc-shaped screen (32) and which, when the entrance (26) and/or exit (27) are released, moves approximately along the lower or upper side of a portion of the arc-shaped screen (32).

14. A construction as claimed in any one of the claims 1 - 4, **characterized in that** the cow shed includes a system of corridors with passageways arranged near the milk box (17), in which computer-controlled doors (38 to 50) are disposed which can be controlled in such a manner that a cow can proceed from a predetermined sub-area to a different sub-area via the milk box (17).

## Patentansprüche

1. Vorrichtung zum Melken von Kühen mit einem als Laufstall (5) ausgeführten Kuhstall, der mit Trennvorrichtungen zur Unterteilung des Kuhstallbereiches in Unterbereiche (6 bis 9) versehen ist, wobei der Kuhstall ferner eine einzige Melkbox (17) umfasst, die einen Melkroboter (37) zum automatischen Melken von Kühen aufweist, wobei die Melkbox (17) im Kuhstall angeordnet ist und von den Kühen in aufeinanderfolgenden Gruppen entweder vom Kuhstall direkt oder über den Kuhstall von einer Weide aus zu betreten ist,
**dadurch gekennzeichnet, daß** der Kuhstall mindestens drei Unterbereiche (6 bis 9) aufweist, wobei Verbindungsvorrichtungen vorhanden sind, um jeden der Unterbereiche (6 bis 9) mit der Melkbox (17) direkt zu verbinden, derart, daß jeder dieser Unterbereiche (6, 7, 8, 9) über die Melkbox (17) mit einem anderen Unterbereich (7, 8, 9, 6) zu verbinden ist, so daß die Melkbox (17) von zu einer Gruppe gehörenden und noch zu melkenden Kühen nacheinander von einem der Unterbereiche aus zu betreten und nach dem Melken zu verlassen ist, wobei die Kühe in einen anderen Unterbereich geleitet werden.

2. Vorrichtung nach Anspruch 1,
**dadurch gekennzeichnet, daß** der Kuhstall auf einer Weide mit Trennvorrichtungen wie z. B. Zäunen oder Elektrozäunen angeordnet ist, die die Weide in mehrere Weideabschnitte (1 bis 4) unterteilen, wobei jeder Weideabschnitt (1 bis 4) nur mit einem Unterbereich (6 bis 9) in Verbindung steht und über einen entsprechenden Unterbereich (6 bis 9) mit der Melkbox (17) zu verbinden ist.

3. Vorrichtung nach Anspruch 2,
**dadurch gekennzeichnet, daß** die Verbindung zwischen einem Weideabschnitt (1 bis 4) und einem zugehörigen Unterbereich (6 bis 9) verschließbar ist.

4. Vorrichtung nach Anspruch 1, 2 oder 3,
**dadurch gekennzeichnet, daß** die Melkbox (17) einen wechselnden Eingang und Ausgang oder einen Eingang und Ausgang mit wechselnder Lage hat.

5. Vorrichtung nach einem der vorhergehenden Ansprüche,
**dadurch gekennzeichnet, daß** die Melkbox (17) von den Kühen nur in einer Richtung zu durchlaufen ist.

6. Vorrichtung nach einem der vorhergehenden Ansprüche,
**dadurch gekennzeichnet, daß** die Melkbox um eine aufwärts gerichtete Achse (18) drehbar ist.

7. Vorrichtung nach Anspruch 6,
**dadurch gekennzeichnet, daß** die Melkbox (17) auf einem Sockel (19) angeordnet ist, der um die aufwärts gerichtete Achse (18) drehbar ist.

8. Vorrichtung nach Anspruch 6 oder 7,
**dadurch gekennzeichnet, daß** eine automatisch betätigbare Steuerung (20) vorhanden ist, mittels der die Melkbox (17) über einen einstellbaren Winkel um die aufwärts gerichtete Achse (18) zu drehen ist.

9. Vorrichtung nach Anspruch 8,
**dadurch gekennzeichnet, daß** die Steuerung (20) einen Schrittmotor aufweist.

10. Vorrichtung nach einem der vorhergehenden Ansprüche,
**dadurch gekennzeichnet, daß** der Eingang (26) und der Ausgang (27) der Melkbox (17) durch zwei Öffnungen gebildet sind, die nebeneinander in einer Längsseitenwand der Melkbox (17) ausgebildet sind.

11. Vorrichtung nach Anspruch 10,
**dadurch gekennzeichnet, daß** der Eingang (26) und der Ausgang (27) der Melkbox (17) durch automatisch zu steuernde Türen (28, 29) verschlossen sind.

12. Vorrichtung nach Anspruch 6 oder einem der Ansprüche 7 bis 11, soweit dieser auf Anspruch 6 rückbezogen ist,
**dadurch gekennzeichnet, daß** die Melkbox (17) eine bogenförmige Abschirmung (32) aufweist, die sich gemeinsam mit der Melkbox (17) dreht.

13. Vorrichtung nach Anspruch 12,
**dadurch gekennzeichnet, daß** der Eingang (26) und der Ausgang (27) der Melkbox (17) durch nach außen schwenkbare Türen (28, 29) verschließbar sind, die ein bogenförmiges Abschirmelement (35, 36) aufweisen, welches zumindest an einem Teil der bogenförmigen Abschirmung (32) kreisförmig anliegt, wenn der Eingang (26) und/oder der Ausgang (27) durch die Türen (28, 29) verschlossen sind, und welches sich etwa längs der Unterseite oder der Oberseite eines Teiles der bogenförmigen Abschirmung (32) bewegt, wenn der Eingang (26) und/oder der Ausgang (27) freigegeben sind.

14. Vorrichtung nach einem der Ansprüche 1 bis 4,
**dadurch gekennzeichnet, daß** der Kuhstall ein nahe der Melkbox (17) angeordnetes System von Gängen mit Durchtrittsöffnungen aufweist, in denen rechnergesteuerte Türen (38 bis 50) angeordnet sind, die derart zu steuern sind, daß eine Kuh von einem vorgegebenen Unterbereich über die Melkbox (17) in einen anderen Unterbereich wechseln kann.

## Revendications

1. Construction pour traire des vaches, comprenant une étable à vaches ouverte, et à stabulation libre (5), l'étable étant munie de moyens de cloisonnement divisant la surface de l'étable en sous-zone (6 à 9), l'étable comprenant en outre une unique stalle de traite (17) ayant un robot trayeur (37) pour traire des vaches automatiquement, laquelle stalle de traite (17) est logée dans l'étable et peut être atteinte par les vaches en groupes consécutifs, soit directement depuis l'étable, soit à partir d'une pâture à travers l'étable,
**caractérisée en ce que** l'étable comporte au moins trois sous-zones (6 à 9), tandis que des moyens de connexion sont prévus pour relier directement chacune des sous-zones (6 à 9) à la stalle de traite (17) de telle manière que chacune de ces sous-zones (6, 7, 8, 9) puisse être reliée à une autre sous-zone (7, 8, 9, 6) à travers la stalle de traite (17) de telle sorte que les vaches qui appartiennent à un groupe et doivent encore être traites puissent entrer consécutivement dans la stalle de traite (17) à partir de n'importe laquelle des sous-zones et peuvent quitter la stalle de traite (17) après avoir été traites et être guidées vers une sous-zone différente.

2. Construction selon la revendication 1, **caractérisée en ce que** l'étable est aménagée dans une pâture munie de moyens de cloisonnement tels que, par exemple, des barrières ou des clôtures à fil électrique, qui divisent la pâture en plusieurs sections (1 à 4) chaque section (1 à 4) de la pâture étant en connexion avec une seule sous-zone (6 à 9) et chaque section (1 à 4) de la pâture pouvant être mise en communication avec la stalle de traite (17) à travers une sous-zone (6 à 9) pertinente.

3. Construction selon la revendication 2, **caractérisée en ce que** la communication entre une section (1 à 4) de la pâture et une sous-zone (6 à 9) pertinente peut être fermée

4. Construction selon la revendication 1, 2 ou 3, **caractérisée en ce que** la stalle de traite (17) a une entrée et une sortie changeantes, ou une entrée et une sortie qui ont un emplacement changeant.

5. Construction selon n'importe laquelle des revendications précédentes, **caractérisée en ce que** les vaches ne peuvent passer que d'une seule manière à travers la stalle de traite (17).

6. Construction selon l'une quelconque des revendications précédentes, **caractérisée en ce que** la stalle de traite est pivotante autour d'un axe (18) dirigé vers le haut.

7. Construction selon la revendication 6, **caractérisée en ce que** la stalle de traite (17) est disposée sur une plate-forme (19) qui est pivotante autour de l'axe (18) dirigé vers le haut.

8. Construction selon la revendication 6 ou 7, **caractérisée en ce qu'**un organe de commande (20), pouvant être commandé automatiquement, est présent, à l'aide duquel la stalle de traite (17) est pivotante sur un angle réglable autour de l'axe (18) dirigé vers le haut.

9. Construction selon la revendication 8, **caractérisée en ce que** l'organe de commande (20) comporte un moteur pas-à-pas.

10. Construction selon l'une quelconque des revendications précédentes, **caractérisée en ce que** l'entrée (26) et la sortie (27) de la stalle de traite (17) sont formées par deux ouvertures prévues côte-à-côte dans une paroi latérale longitudinale de la stalle de traite (17).

11. Construction selon la revendication 10, **caractérisée en ce que** l'entrée (26) et la sortie (27) de la stalle de traite (17) sont fermées par des portes (28, 29) pouvant être commandées automatiquement.

12. Construction telle que revendiquée dans la revendication 6 ou dans n'importe laquelle des revendications 7 à 11 en tant que dépendantes de la revendication 6, **caractérisée en ce que** la stalle de traite. (17) comporte un écran (32) en forme d'arc de cercle, qui pivote ensemble avec la stalle de traite (17).

13. Construction selon la revendication 12, **caractérisée en ce que** l'entrée (26) et la sortie (27) de la stalle de traite (17) peuvent être fermées par des portes (28, 29) pivotantes vers l'extérieur, qui sont munies d'un élément (35, 36) formant écran, en arc de cercle qui, quand l'entrée (26) et/ou la sortie (27) sont fermées par les portes (28, 29) est contigu, en une forme circulaire, à au moins une partie de l'écran (32) en forme d'arc de cercle et qui,quand l'entrée (26) et/ou la sortie (27) sont dégagées, se déplace approximativement le long du côté inférieur ou du côté supérieur d'une partie de l'écran (32) en forme d*arc de cercle.

14. Construction selon l'une quelconque des revendications 1 à 4, **caractérisée en ce que** l'étable à vaches comporte un système de corridors avec des passages aménagés près de la stalle de traite (171, dans lesquels sont disposées des portes (38 à 50) commandées par ordinateur qui peuvent être commandées de telle manière qu'une vache puisse aller d'une sous-zone prédéterminée à une sous-zone différente en passant par la stalle de traite (17).
